# DEMANDE DE BREVET EUROPEEN

(11) **EP 4 652 847 A1**
(43) Date de publication de la demande: **26.11.2025**
(21) Numéro de dépôt: 24305816.1
(22) Date de dépôt: 24.05.2024
(51) Int. Cl.: A21C 11/10, A21C 11/16, A23P 30/20, B26D 1/12

(54) **DISPOSITIF DE FORMAGE DE PATES ALIMENTAIRES, INSTALLATION ET PROCEDE DE FABRICATION CORRESPONDANTS**

(71) Demandeur: Lustucru Frais, 69008 Lyon (FR)
(72) Inventeur: DREUX, Vincent, 69110 SAINTE FOY LES LYON (FR)
(74) Mandataire: Cabinet Didier Martin

(57) **Abrégé**

- Dispositif de formage de pâtes alimentaires, installation et procédé de fabrication correspondants.
- L'invention concerne un dispositif de formage (1) de pâtes alimentaires comprenant :
- des buses d'extrusion (2) pour former des extrudats,
- un rouleau (4) de découpe cyclique desdits extrudats, monté mobile à rotation selon un axe de rotation (X-X'),
caractérisé en ce que ledit rouleau (4) de découpe cyclique comprend une pluralité de couteaux individuels (5) répartis selon une distribution hélicoïdale le long dudit axe de rotation (X-X').
- Dispositifs et procédés de fabrication de produits alimentaires.

## Description

La présente invention se rapporte au domaine général des produits alimentaires, et plus précisément au domaine technique des pâtes alimentaires.

La présente invention concerne en particulier un dispositif de formage de pâtes alimentaires destinées à être réchauffées et/ou cuites avant d'être consommées, ainsi qu'une installation et un procédé de fabrication de telles pâtes alimentaires.

Les pâtes alimentaires sont des aliments particulièrement prisés des consommateurs, en particulier lorsqu'elles se présentent sous la forme de palets, boudins, ou encore boulettes, comme par exemple les tortellinis, les ravioles...

Ces produits alimentaires peuvent être fabriqués de manière artisanale, mais aussi et surtout de façon industrielle, afin en particulier de répondre à la demande importante des consommateurs. Il est connu, pour fabriquer industriellement de telles pâtes alimentaires sous forme de palets, boudins ou boulettes, de recourir à une opération d'extrusion d'une composition pâteuse à travers des buses d'extrusion, disposées par exemple en ligne, afin de former de façon continue des extrudats qui sont automatiquement découpés en aval et à distance des sorties des buses pour former lesdits palets, boudins ou boulettes. Plus précisément, les extrudats issus de la rangée de buses d'extrusion sont découpés au moyen d'un rouleau de découpe qui porte des lames allongées enroulées sur toute sa longueur et qui est associé à un rouleau d'entraînement rotatif. Ledit rouleau de découpe est disposé à l'aval des buses d'extrusion, bien au-delà de la sortie de ces dernières, et il tourne selon un axe de rotation sensiblement parallèle à la rangée de buses d'extrusion.

Une telle installation de formage donne globalement satisfaction, notamment car elle permet d'atteindre des cadences de fabrication intéressantes. Elle n'en présente pas moins toutefois de sérieux inconvénients.

En particulier, chaque lame allongée exerce simultanément un effort de découpe sur plusieurs extrudats issus de plusieurs buses d'extrusion en même temps, ce qui peut engendrer des efforts mécaniques intempestifs susceptibles de nuire à la précision de la découpe, voire même de détériorer la lame.

En outre, les lames allongées mises en oeuvre dans l'art antérieur présentent une certaine flexibilité qui nuit à leur durabilité et également là encore à la précision de coupe. De plus, la mise en oeuvre des lames allongées prévue dans l'art antérieur ne permet pas un farinage optimal, pourtant nécessaire pour assurer une lubrification efficace lors du formage.

Enfin, la maintenance des installations connues décrites ci-avant s'avère être relativement complexe et onéreuse, et leur exploitation peut s'avérer délicate, avec là encore des coûts potentiellement élevés pour maintenir un niveau de qualité optimal.

Les objets assignés à l'invention visent par conséquent à remédier aux différents inconvénients exposés dans ce qui précède, et à proposer un nouveau dispositif de formage de pâtes alimentaires qui, tout en étant de conception extrêmement simple, polyvalente et robuste, permet un formage précis et fiable, avec des coûts d'exploitation et de maintenance maîtrisés.

Un autre objet de l'invention vise à proposer un nouveau dispositif de formage de pâtes alimentaires qui repose sur la mise en oeuvre d'un minimum de composants mécaniques différents et dont la fabrication est bon marché et facile à industrialiser.

Un autre objet de l'invention vise à proposer un nouveau dispositif de formage de pâtes alimentaires de construction compacte.

Un autre objet de l'invention vise à proposer un nouveau dispositif de formage dont la conception est susceptible de favoriser un farinage optimal de la composition pâteuse en sortie d'extrusion.

Un autre objet de l'invention vise à proposer un nouveau dispositif de formage de pâtes alimentaires dont la conception facilite tout particulièrement la maintenance, la réparation et le nettoyage.

Un autre objet de l'invention vise à proposer un nouveau dispositif de formage de pâtes alimentaires de construction particulièrement durable.

Un autre objet de l'invention vise à proposer de nouveaux installation et procédé de fabrication de pâtes alimentaires qui permettent de fabriquer des pâtes alimentaires dans des conditions industrielles optimales, de façon particulièrement rapide, précise, fiable et bon marché, avec une maintenance minimale et facilitée.

Les objets assignés à l'invention sont atteints à l'aide d'un dispositif de formage de pâtes alimentaires destinées à être réchauffées et/ou cuites avant d'être consommées, ledit dispositif de formage comprenant :
- des buses d'extrusion par lesquelles est destinée à passer une composition pâteuse, pour former, en sortie desdites buses, des extrudats à partir desquels les pâtes alimentaires sont destinées à être formées,
- un rouleau de découpe cyclique desdits extrudats en sortie desdites buses d'extrusion, ledit rouleau de découpe cyclique étant monté mobile à rotation relativement auxdites buses d'extrusion, selon un axe de rotation,
caractérisé en ce que ledit rouleau de découpe cyclique comprend une pluralité de couteaux individuels qui sont distincts et distants les uns des autres, lesdits couteaux étant répartis selon une distribution hélicoïdale le long dudit axe de rotation.

Les objets assignés à l'invention sont également atteints à l'aide d'une installation de fabrication de pâtes alimentaires destinées à être réchauffées et/ou cuites avant d'être consommées, ladite installation incluant au moins :
- un poste de fabrication d'une composition pâteuse à partir de laquelle lesdites pâtes alimentaires sont destinées à être fabriquées,
- un dispositif de formage selon l'invention.

Les objets assignés à l'invention sont enfin atteints à l'aide d'un procédé de fabrication de pâtes alimentaires destinées à être réchauffées et/ou cuites avant d'être consommées, ledit procédé comprenant :
- une opération d'extrusion au cours de laquelle une composition pâteuse passe par des buses d'extrusion pour former, en sortie desdites buses, des extrudats à partir desquels les pâtes alimentaires sont destinées à être formées,
- une opération de découpe cyclique desdits extrudats en sortie desdites buses d'extrusion,
caractérisé en ce que ladite opération de découpe cyclique est effectuée au moyen d'un rouleau de découpe cyclique qui tourne relativement auxdites buses d'extrusion, selon un axe de rotation, ledit rouleau de découpe cyclique comprenant une pluralité de couteaux individuels qui sont distincts et distants les uns des autres, lesdits couteaux étant répartis selon une distribution hélicoïdale le long dudit axe de rotation.

D'autres particularités et avantages de l'invention apparaîtront et ressortiront plus en détail à la lecture de la description faite ci-après, en référence aux dessins annexés, donnés uniquement à titre d'exemples illustratifs et non limitatifs, parmi lesquels :
La figure 1 illustre, selon une vue schématique en perspective avant, un détail de réalisation d'un dispositif de formage de pâtes alimentaires conforme à l'invention.
La figure 2 illustre, selon une vue schématique en perspective arrière, le détail de réalisation du dispositif de formage de la figure 1.

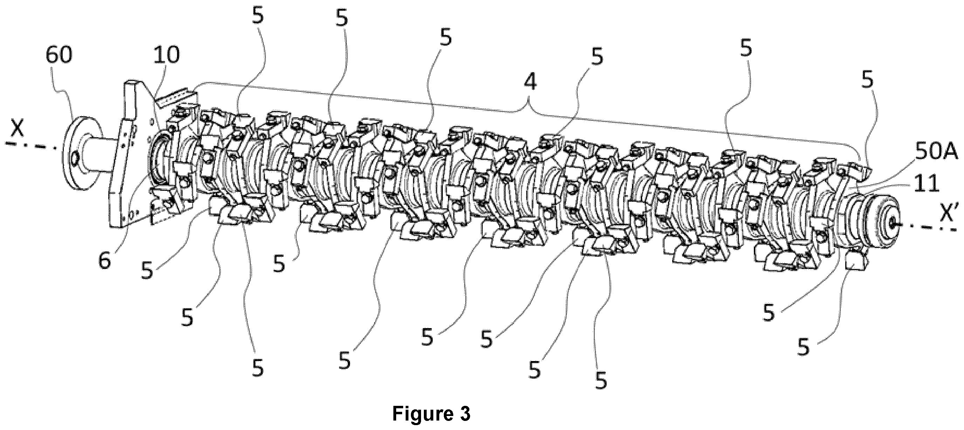

La figure 3 illustre, selon une vue schématique en perspective, un rouleau de découpe modulaire qui fait partie du dispositif de formage des figures 1 et 2.
La figure 4 est une vue schématique en coupe transversale du détail de réalisation des figures 1 et 2.

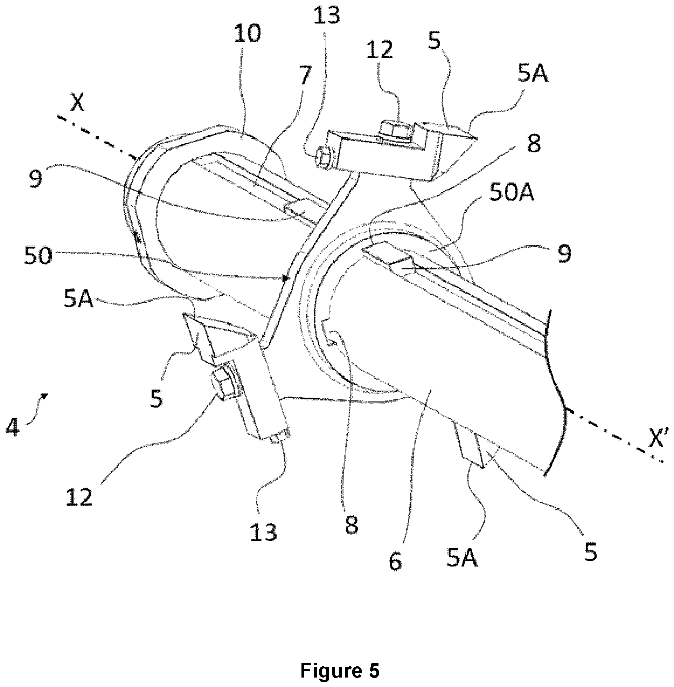

La figure 5 illustre, selon une vue schématique en perspective, un détail de réalisation du rouleau de découpe mis en oeuvre par le dispositif de formage illustré aux figures précédentes, avec en particulier un arbre central sur lequel est ménagée une rainure de clavette, un module qui est muni d'une pluralité de mortaises et est enfilé sur l'arbre central, ainsi qu'une clavette insérée à la fois dans l'une desdites mortaises et ladite rainure pour bloquer ainsi en rotation ledit module par rapport à l'arbre central.

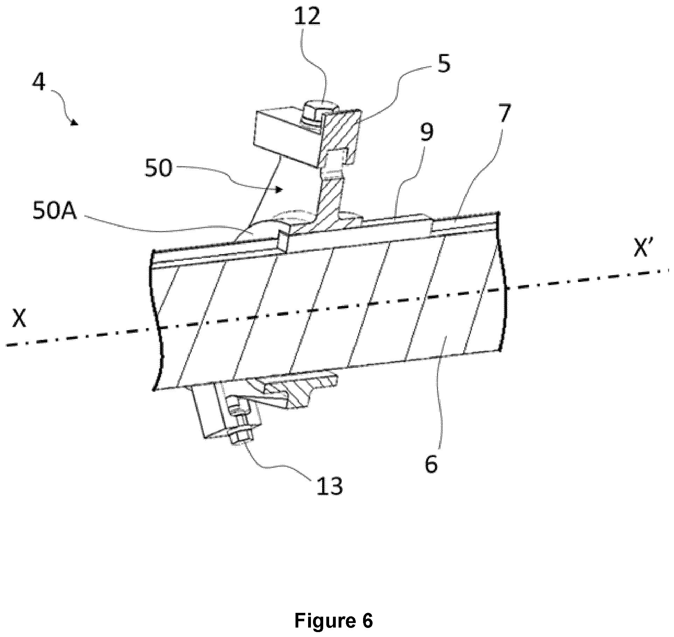

La figure 6 est une vue schématique en coupe longitudinale du détail de réalisation de la figure 5.

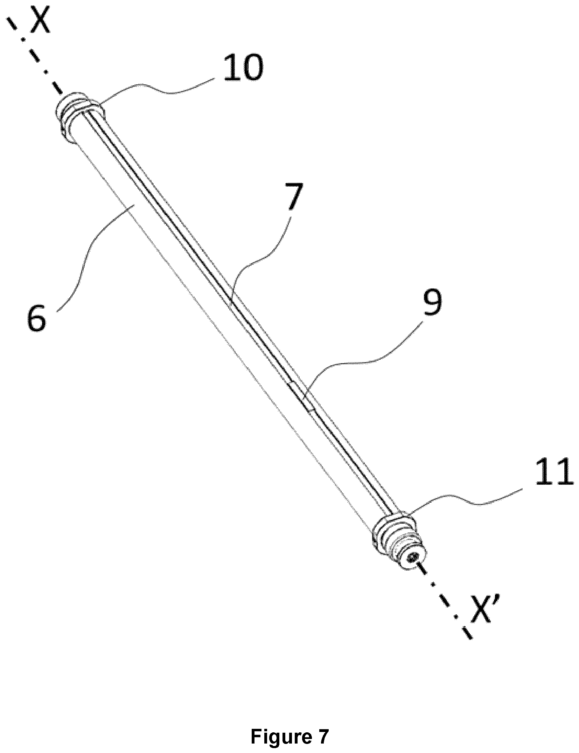

La figure 7 illustre l'arbre central des figures 5 et 6, avec une clavette disposée dans sa rainure longitudinale et des flasques de maintien enfilés sur l'arbre central et fixés à chacune des extrémités de ce dernier.

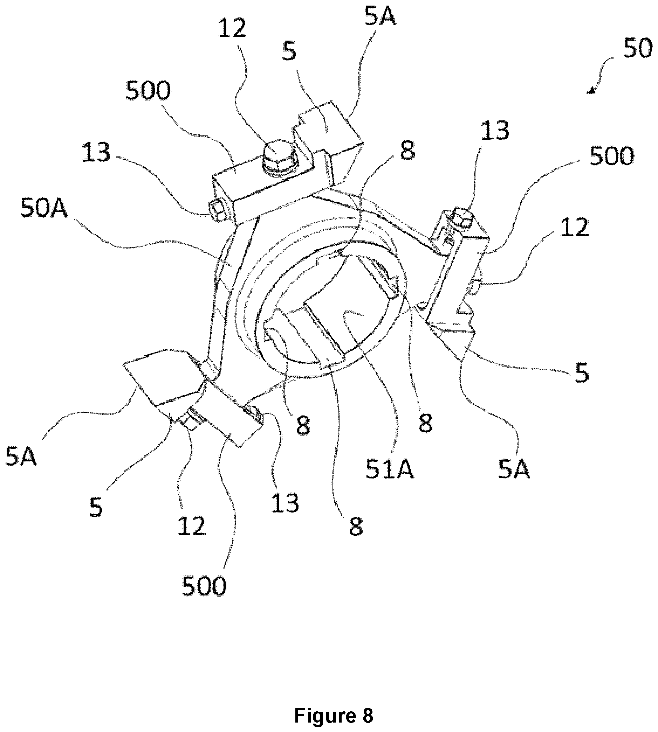

La figure 8 illustre, selon une vue schématique en perspective, un module du rouleau de découpe modulaire mis en oeuvre par le dispositif de formage illustré aux figures précédentes.

La figure 9 illustre, selon une vue schématique de dessus, deux modules du rouleau de découpe illustrés aux figures précédentes et qui sont adjacents, avec leurs couteaux respectifs décalés angulairement.

L'invention concerne un dispositif de formage 1 de pâtes alimentaires, qui est destiné à faire partie d'une installation de fabrication de pâtes alimentaires. Ladite installation de fabrication, qui constitue en tant que telle un des aspects de l'invention, est donc avantageusement une installation de pastification, pour fabriquer des pâtes alimentaires. L'installation de fabrication en question, qui inclut ledit dispositif de formage 1 selon l'invention, est avantageusement une installation de fabrication industrielle automatisée, conçue pour assurer de préférence une fabrication de pâtes en continu. De la même manière, le dispositif de formage 1 selon l'invention est lui-même un dispositif de formage industriel automatisé, conçu pour assurer de préférence un formage des pâtes alimentaires en continu.

Les pâtes alimentaires formées au moyen du dispositif de formage 1 selon l'invention, et fabriquées au moyen de l'installation de fabrication selon l'invention (laquelle inclut ledit dispositif de formage 1), sont destinées à être réchauffées et/ou cuites avant d'être consommées. Il s'agit donc de pâtes alimentaires qui ne sont pas prévues pour être consommées, mangées, en l'état, mais qui nécessitent au contraire une opération préalable de réchauffage et/ou de cuisson afin de développer pleinement leurs qualités organoleptiques. Les pâtes alimentaires en question peuvent être réchauffées ou cuites par immersion dans un liquide chaud, comme par exemple de l'eau portée à ébullition.

Alternativement, elles peuvent être destinées à être réchauffées ou cuites à la poêle, c'est-à-dire être poêlées, en présence par exemple d'un corps gras (huile végétale, beurre...). Au sens de l'invention, le terme « *pâte alimentaire* » n'est pas limité à une définition légale ou normative, et concerne tout aliment obtenu à partir d'un mélange qui inclut au moins une farine et/ou une semoule de céréale et un liquide d'hydratation. Avantageusement, lesdites pâtes alimentaires fabriquées au moyen du dispositif de formage 1 selon l'invention sont destinées à être conservées au réfrigérateur (par exemple à une température comprise entre 0°C et 4°C) avant cuisson et consommation, et sont destinées par exemple à être vendues au rayon « *frais* » des magasins. Lesdites pâtes alimentaires fabriquées au moyen du dispositif 1 selon l'invention sont avantageusement des pâtes farcies, comme par exemple des ravioles ou des tortellinis, c'est-à-dire qu'elles englobent un coeur de farce dont elles sont fourrées. Par exemple, la farce en question peut être une préparation comprenant du fromage ou une spécialité fromagère, et / ou une purée de légume(s) et / ou de la viande hachée, *etc.*

Lesdites pâtes alimentaires sont plus précisément destinées à être formées à partir d'une composition pâteuse. Cette dernière est avantageusement fabriquée par malaxage et cuisson d'un mélange formé à partir au moins d'une part d'une farine et/ou d'une semoule d'au moins une céréale contenant des protéines capables de former du gluten et d'autre part d'un liquide d'hydratation. À l'issue du malaxage et de la cuisson, de préférence simultanés, dudit mélange, est obtenue une substance molle, malléable, qui se présente sous la forme d'une masse cohésive, sensiblement homogène, présentant la consistance d'une pâte, avec en particulier une capacité d'écoulement. La mise en oeuvre d'une céréale (ou d'un mélange de céréales) qui contient des protéines (typiquement des prolamines et des glutamines) capable de former du gluten confère à la composition pâteuse une certaine élasticité, laquelle contribue avantageusement notamment à une bonne tenue des pâtes alimentaires lors du réchauffage ou de la cuisson, et à l'obtention d'une texture relativement ferme et élastique des pâtes après réchauffage ou cuisson de ces dernières. De préférence, ladite céréale est du blé. Ladite farine de céréales avantageusement mise en oeuvre pour obtenir la composition pâteuse est alors préférentiellement une farine de blé tendre, tandis que ladite semoule de céréales avantageusement mise en oeuvre pour obtenir la composition pâteuse est préférentiellement une farine de blé dur. Bien évidemment, d'autres céréales peuvent être mises en oeuvre, comme par exemple l'orge, l'épeautre, le seigle, ou encore l'avoine, cette liste n'étant pas limitative.

Le mélange à partir duquel est formé la composition pâteuse peut inclure en outre d'autres ingrédients en plus de la farine et/ou de la semoule de céréales et du liquide d'hydratation. Ces ingrédients complémentaires peuvent inclure par exemple des oeufs, du lait, du gluten, des légumes ou extraits de légumes, ou encore des aromates, ou tout autre adjuvant.

Selon un mode de réalisation préférentiel particulier, le mélange à partir duquel est formé la composition pâteuse inclut avantageusement un féculent, comme par exemple du tubercule de *Solanum tuberosum.* Dans ce cas, le mélange en question comprend préférentiellement des flocons (préférentiellement déshydratés) et/ou de la poudre et/ou des granules de tubercule de *Solanum tuberosum,* ou encore une purée de tubercule de *Solanum tuberosum* (préparation humide de tubercule de *Solanum tuberosum* écrasé), mélangés avec la farine et/ou la semoule de céréales et le liquide d'hydratation, pour former par exemple des produits en forme de boulettes ou boudins.

De préférence, le liquide d'hydratation est de l'eau, mais il peut alternativement s'agir d'un autre liquide, par exemple du lait ou un liquide d'origine végétale, ou tout autre liquide permettant, en étant dosé de manière appropriée, l'obtention d'une composition de consistance pâteuse. Le liquide d'hydratation peut éventuellement être déjà inclus, en tout ou partie, dans certains des autres ingrédients (par exemple dans de la purée de tubercule de *Solanum tuberosum*)*.*

De préférence, lesdites pâtes alimentaires sont des pâtes fraîches avec un taux d'humidité qui est supérieur à 12 % en masse, de façon préférentielle supérieur à 20 % en masse, et de façon encore plus préférentielle supérieur à 30 % en masse.

Avantageusement, les pâtes alimentaires fabriquées au moyen du dispositif 1 de fabrication selon l'invention se présentent sous la forme de boulettes, boudins et/ou palets formés à partir de la composition pâteuse, et qui sont éventuellement farcis ou fourrés, comme évoqué précédemment, avec une farce qui peut être une préparation comprenant du fromage ou une spécialité fromagère, et / ou une purée de légume(s) et / ou de la viande hachée. Lesdites pâtes alimentaires forment par exemple des tortellinis ou des ravioles.

Par exemple, dans le cas où les pâtes alimentaires fabriquées au moyen du dispositif 1 sont sous forme de boulettes ou boudins, le mélange permettant d'obtenir la composition pâteuse est formé à partir au moins de :
- 15 % à 40 % en masse de farine et/ou de semoule de céréales ;
- 10 à 25 % en masse de flocons de tubercule de *Solanum tuberosum* déshydraté,
- 40 à 60 % en masse d'eau.

Ledit mélange est en revanche dépourvu d'agent levant (ou agent de levage), qu'il s'agisse d'un agent de levage chimique (poudre à lever ou levure chimique) ou naturelle (levure) de sorte que la composition pâteuse est avantageusement obtenue sans levage biologique (et donc sans fermentation) ou chimique.

Ladite installation de fabrication inclut ainsi au moins le dispositif de formage 1 selon l'invention, ainsi qu'au moins un poste de fabrication de ladite composition pâteuse à partir de laquelle lesdites pâtes alimentaires sont destinées à être fabriquées. Ledit poste de fabrication de la composition pâteuse inclut par exemple des moyens de malaxage et cuisson des ingrédients formant la composition pâteuse, et par exemple des moyens de malaxage et cuisson d'un mélange formé à partir d'au moins d'une farine et/ou d'une semoule d'au moins une céréale contenant des protéines capables de former du gluten et d'un liquide d'hydratation.

De préférence, ladite installation de fabrication de pâtes alimentaires comprend une cuve conçue pour contenir ladite composition pâteuse à partir de laquelle les pâtes alimentaires sont destinées à être formées, ladite cuve étant avantageusement conçue pour alimenter ledit dispositif de formage 1 et/ou faisant partie de ce dernier.

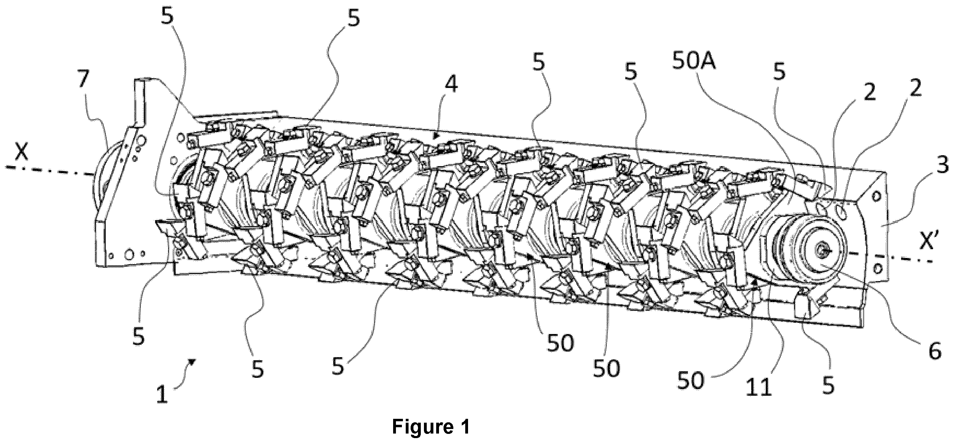

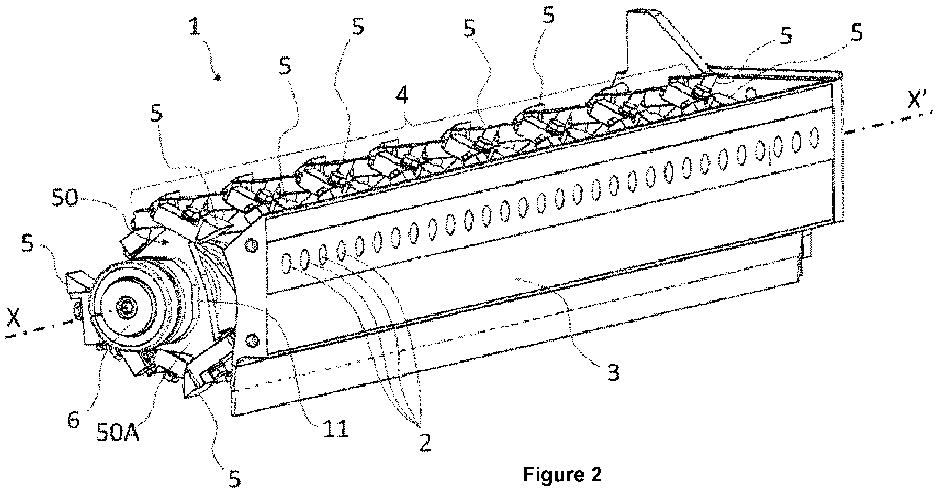

Comme illustré par les figures 1, 2 et 4, le dispositif de formage 1 selon l'invention comprend des buses d'extrusion 2 par lesquelles est destinée à passer ladite composition pâteuse, pour former, en sortie desdites buses 2, des extrudats à partir desquels les pâtes alimentaires sont destinées à être formées. Lesdites buses d'extrusion 2 sont par exemple associées à la cuve précitée pour être par exemple alimentées en composition pâteuse provenant de ladite cuve. Selon ce mode de réalisation préférentiel, les buses d'extrusion 2 sont en communication fluidique avec l'intérieur de la cuve, pour permettre un écoulement de la composition pâteuse contenue dans la cuve par les buses d'extrusion 2, vers l'extérieur. Les buses d'extrusion 2 se présentent avantageusement, comme illustré aux figures, sous la forme d'orifices, par exemple de forme circulaire, ménagés à travers l'épaisseur d'une plaque 3 (par exemple métallique) qui forme une filière d'extrusion. Lesdites buses d'extrusion 2 sont avantageusement disposées en rang, les unes à côté et à distance des autres, comme illustré. Ledit rang de buses d'extrusion 2 est avantageusement rectiligne et horizontal, comme illustré aux figures. Il est cependant parfaitement envisageable de prévoir une pluralité de rangs, et/ou de recourir à un ou plusieurs rangs qui s'étendent selon des directions rectilignes autres qu'horizontales, ou encore selon des profils curvilignes, sans pour autant que l'on sorte du cadre de l'invention.

La composition pâteuse est avantageusement destinée à passer simultanément à travers toutes les buses d'extrusion 2, de façon continue, de sorte que des extrudats, sous forme de cordons continus de composition pâteuse, sortent desdites buses d'extrusion 2.

Dans le cas où le dispositif 1 est destiné à fabriquer des pâtes alimentaires farcies, ledit dispositif 1 est avantageusement conçu pour associer la composition pâteuse avec une farce (ou garniture). Ladite association de la composition pâteuse et de la farce est effectuée par le dispositif 1 par exemple par co-extrusion de la composition pâteuse et de la farce, ce qui permet d'associer de manière rapide, simple et efficace la composition pâteuse et la farce, la composition pâteuse venant avantageusement envelopper la farce. Avantageusement, ladite co-extrusion correspond à un assemblage, une combinaison, de la composition pâteuse et de la farce par poussage conjoint de ces dernières au travers de filières ou buses d'extrusion. On obtient de la sorte avantageusement des boulettes, boudins et / ou palets farcis (ou fourrés), et par exemple des boudins cylindriques aux extrémités fermées et d'un poids unitaire préférentiellement compris entre 6 g et 12 g environ, farce incluse. Avantageusement, de tels boulettes, boudins et / ou palets peuvent être formés de 20 % à 50 % en masse de farce (par exemple, 30 % en masse) et de 50 % à 80 % en masse de composition pâteuse (par exemple, 70 % en masse). Des proportions différentes peuvent toutefois bien évidemment être mises en oeuvre, selon notamment la nature de la composition pâteuse et / ou de la farce, ou encore selon le profil organoleptique et / ou nutritionnel recherché.

Conformément à l'invention, le dispositif de formage 1 comprend également un rouleau 4 de découpe cyclique desdits extrudats en sortie desdites buses d'extrusion 2.

Le rouleau 4 de découpe est avantageusement conçu pour découper automatiquement les extrudats issus de chacune des buses d'extrusion 2 en portions élémentaires (ou pâtons), de façon cyclique, pour obtenir par exemple des boulettes, boudins et/ou palets de composition pâteuse. Comme illustré aux figures, le rouleau 4 de découpe cyclique est avantageusement disposé en sortie des buses d'extrusion 2, c'est-à-dire à l'aval de ces dernières par rapport au sens d'écoulement de la composition pâteuse dans les buses 2. Le rouleau 4 de découpe cyclique permet ainsi avantageusement de découper de manière continue et cyclique les extrudats en sortie des buses d'extrusion 2 pour former des pâtons élémentaires (correspondant chacun à des tronçons d'extrudat), de dimensions prédéterminées, à une cadence prédéterminée impartie par la fréquence de découpe et la vitesse d'extrusion.

Comme illustré aux figures, ledit rouleau 4 de découpe cyclique est monté mobile à rotation, relativement auxdites buses d'extrusion 2, selon un axe de rotation X-X'. Avantageusement, ledit dispositif de formage 1 comprend un bâti qui supporte les buses d'extrusion 2 ainsi que le rouleau 4 de découpe cyclique. Lesdites buses d'extrusion 2 sont avantageusement fixes par rapport audit bâti, tandis que ledit rouleau 4 de découpe cyclique est monté à rotation par rapport audit bâti, selon l'axe de rotation X-X'. Le dispositif de formage 1 comprend avantageusement un moteur (par exemple électrique) qui est relié audit rouleau 4 de découpe cyclique pour entraîner ce dernier en rotation selon l'axe de rotation X-X', de préférence à une vitesse prédéterminée constante. De préférence, ledit rouleau 4 de découpe cyclique s'étend longitudinalement selon une direction d'extension longitudinale sensiblement parallèle audit axe de rotation X-X'. Dans ce mode de réalisation préférentiel, qui correspond à celui illustré aux figures, le rouleau 4 de découpe cyclique affecte la forme globale d'un cylindre muni d'arêtes tranchantes à sa périphérie, comme cela sera décrit plus en détail dans ce qui suit. Le rouleau 4 de découpe cyclique est avantageusement disposé au droit et en regard des buses d'extrusion 2 (comme illustré), pour couper chaque extrudat de façon cyclique (sous l'effet de ladite rotation, avantageusement impartie par le moteur), sensiblement immédiatement à la sortie des buses d'extrusion 2.

Comme illustré aux figures, ledit rouleau 4 de découpe cyclique comprend une pluralité de couteaux individuels 5 qui sont distincts et distants les uns des autres. Lesdits couteaux 5 sont avantageusement identiques les uns aux autres, et sont de préférence réalisés en un matériau métallique, par exemple en laiton. Chaque couteau 5 est disposé en périphérie du rouleau 4, comme illustré aux figures. Les couteaux 5 de ladite pluralité de couteaux qui équipe le rouleau 4 de découpe cyclique sont espacés les uns des autres, et forment des excroissances localisées indépendantes les unes des autres. Cette configuration permet en particulier de distribuer efficacement de la farine (ou tout autre ingrédient de lubrification pulvérulent ou liquide) sur les extrudats issus des buses 2, à partir par exemple d'une réserve de farine disposée avantageusement au-dessus du rouleau 4 de découpe. La farine peut ainsi circuler aisément dans les espaces interstitiels qui séparent lesdits couteaux 5 entre eux, sans être bloquée par ces derniers, ce qui permet un farinage efficace et ainsi une lubrification optimale.

Comme illustré aux figures, lesdits couteaux 5 sont répartis selon une distribution hélicoïdale le long dudit axe de rotation X-X'. En d'autres termes, lesdits couteaux 5 sont disposés le long du rouleau 4 de découpe cyclique selon une distribution en hélice, en spirale. Cela signifie que les couteaux individuels 5 sont disposés en enroulement autour de l'axe de rotation X-X', c'est-à-dire qu'ils forment des spires autour dudit axe de rotation X-X'. Grâce à cet agencement hélicoïdal, les extrudats issus des buses d'extrusion 2 sont découpés les uns après les autres de façon cyclique (i.e. successivement de manière cyclique), et non tous en même temps de manière cyclique (i.e. simultanément de manière cyclique). La répartition hélicoïdale des couteaux 5 permet d'assurer ainsi un cycle de découpe séquentielle qui étale les efforts mécaniques dans le temps et le long du rouleau 4 de découpe, limitant ainsi les sollicitations mécaniques susceptibles de détériorer le matériel et/ou d'affecter la précision de découpe. Ainsi, la mise en oeuvre de couteaux individuels 5 distincts, espacés les uns des autres, combinée avec une répartition hélicoïdale desdits couteaux 5 conduit à une efficacité, robustesse et précision de découpe optimales.

Lesdits couteaux 5 peuvent être répartis le long de l'axe de rotation X-X' pour former une seule et même hélice qui s'étend par exemple sur toute la longueur du rouleau 4 de découpe cyclique, ou encore, alternativement, pour former plusieurs hélices, parallèles ou entrelacées ou entrecroisées, qui s'étendent sur toute la longueur du rouleau 4 de découpe. Le recours à une distribution des couteaux 5 selon plusieurs hélices (de préférence parallèles entre elles) le long du rouleau 4 est préféré, comme illustré aux figures, car il permet d'atteindre une cadence de fabrication optimale tout en conférant une grande robustesse et durabilité au rouleau 4 de découpe.

Avantageusement, lesdits couteaux 5 sont destinés à suivre des trajectoires circulaires respectives, sous l'effet de la rotation dudit rouleau 4 de découpe cyclique. Avantageusement, chaque couteau 5 présente une arête de coupe 5A qui s'étend sensiblement parallèlement audit axe de rotation X-X'. Chaque arête de coupe 5A forme ainsi un bord tranchant, avantageusement formé par la jonction de deux pans inclinés l'un par rapport à l'autre, comme illustré aux figures. Avantageusement, chaque couteau 5 comprend un bloc de coupe de forme sensiblement polyédrique qui présente deux faces planes inclinées l'une par rapport à l'autre et dont l'intersection forme ladite arête de coupe 5A. Le bloc de coupe présente ainsi un caractère relativement massif, qui contribue à la robustesse du couteau 5, ainsi qu'à sa fiabilité et à sa précision.

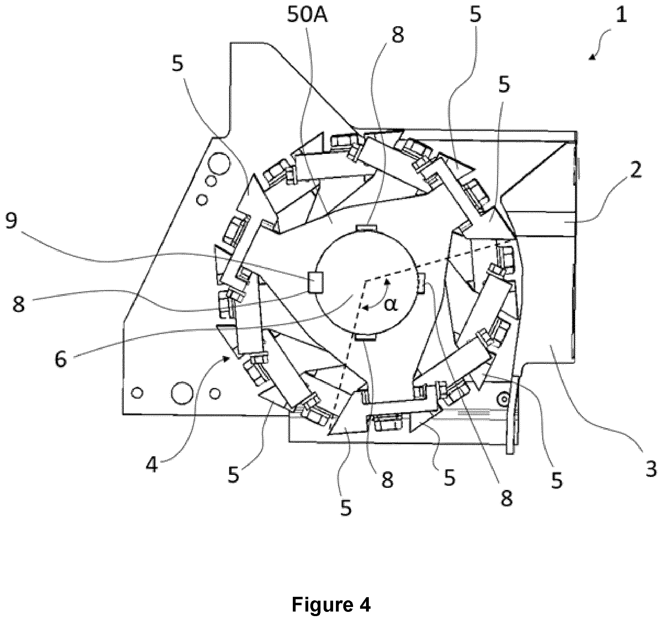

Chaque arête de coupe 5A est avantageusement rectiligne, parallèle audit axe de rotation X-X' et à équidistance de ce dernier. Ainsi, la trajectoire opérée par chaque arête de coupe 5A lors de la mise en rotation du rouleau 4 selon l'axe de rotation X-X' s'inscrit dans un cylindre de révolution d'axe X-X', ledit cylindre venant préférentiellement tangenter la sortie de chaque buse d'extrusion 2, comme cela ressort en particulier de la figure 4. Chaque buse d'extrusion 2 est avantageusement positionnée au droit d'une seule desdites trajectoires circulaires suivies par lesdits couteaux 5, pour que chaque couteau 5 assure la découpe cyclique d'un seul desdits extrudats issu d'une seule desdites buses d'extrusion 2. Grâce à cette mesure technique, la découpe est précise et les couteaux 5 sont préservés de manière optimale de toute détérioration.

Avantageusement, lesdits couteaux 5 sont répartis en une pluralité de groupes de n couteaux 5, avec n ≥ 2, et de préférence n ≥ 3. Chacun desdits groupes de n couteaux présente une symétrie de rotation discrète d'ordre n selon ledit axe de rotation X-X'. Lesdits groupes de n couteaux 5 sont avantageusement répartis à intervalles réguliers, en rang les uns derrière les autres le long dudit axe de rotation X-X', avec un décalage angulaire entre deux groupes adjacents, pour réaliser ainsi ladite distribution hélicoïdale le long dudit axe de rotation X-X'. Du fait de ce décalage angulaire, les couteaux 5 de chaque groupe de couteaux 5 adjacents au sein du rang ne sont pas alignés selon la direction d'extension longitudinale (parallèle à l'axe de rotation X-X'), de sorte à suivre un profil en hélice le long du rouleau 4. Ceci permet de faire en sorte que les extrudats issus des buses d'extrusion 2 soient découpés les uns après les autres, de façon cyclique, et non tous en même temps de manière cyclique, avec les avantages (énoncés précédemment) qui découlent d'un tel cycle de découpes successives le long du rouleau 4.

Lesdits groupes de n couteaux 5 sont avantageusement identiques entre eux. Dans le mode de réalisation préférentiel illustré aux figures, les couteaux 5 sont répartis en une pluralité de groupes identiques de trois couteaux (c'est-à-dire que n = 3), chacun desdits groupes présentant une symétrie de rotation discrète d'ordre 3 selon l'axe de rotation X-X'. Cela signifie que les couteaux 5 d'un même groupe sont avantageusement disposés selon une répartition angulaire régulière autour de l'axe de rotation X-X', comme illustré aux figures. Lesdits couteaux 5 d'un même groupe sont en d'autres termes disposés à équidistance les uns des autres, c'est-à-dire qu'ils sont équi-angulairement répartis, en étant en l'espèce séparés deux à deux d'un angle α sensiblement égal à 120°. Dans le mode de réalisation illustré aux figures, chaque groupe de n couteaux (avec en l'espèce n = 3) est avantageusement décalé angulairement avec chaque autre groupe qui lui est adjacent, de façon à distribuer les couteaux 5 en hélice autour de l'axe de rotation X-X'. Dans ce mode de réalisation, où chaque groupe inclut trois couteaux 5 équi-angulairement répartis autour de l'axe X-X', les couteaux 5 sont agencés pour former trois hélices parallèles et de même pas qui s'étendent sur toute la longueur du rouleau 4, autour de l'axe X-X'.

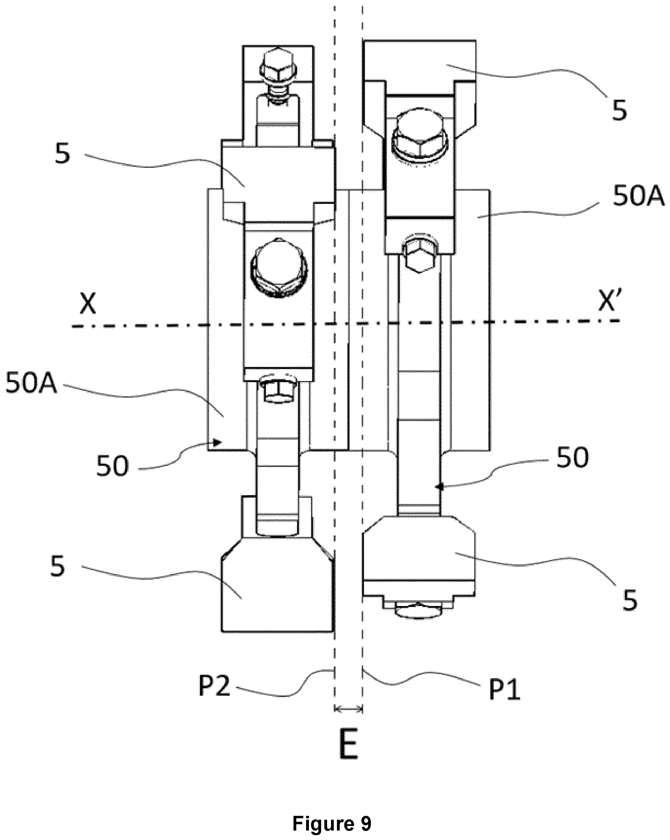

Avantageusement, chaque groupe de couteaux 5 s'étend, selon une direction d'extension longitudinale parallèle audit axe de rotation X-X', entre des plans gauche P1 et droit P2 perpendiculaires audit axe de rotation X-X'. Comme illustré en particulier à la figure 9, le plan gauche P1 de chaque groupe de n couteaux est distant du plan droit P2 d'un autre groupe de n couteaux qui lui est adjacent au sein dudit rang de groupes de couteaux 5, pour ménager un espace intergroupe E libre selon la direction d'extension longitudinale (laquelle est parallèle à l'axe de rotation X-X'). Ainsi, les couteaux 5 d'un même groupe sont séparés de ceux appartenant à un autre groupe adjacent au sein du rang de groupes par l'espace interstitiel libre E selon la direction d'extension longitudinale. En d'autres termes, les couteaux 5 d'un même groupe sont sensiblement coplanaires, c'est-à-dire qu'ils sont tous sécants avec un même plan médian (qui est avantageusement un plan de symétrie pour le groupe concerné) perpendiculaire à l'axe de rotation X-X', lesdits plans médians de chaque groupe étant espacés les uns des autres. Grâce à la présence de l'espace longitudinal libre E, il est possible de distribuer efficacement de la farine (ou tout autre ingrédient de lubrification pulvérulent ou liquide) sur les extrudats issus des buses 2, à partir par exemple d'une réserve de farine disposée avantageusement au-dessus du rouleau 4 de découpe. La farine peut ainsi circuler aisément dans les espaces interstitiels E sans être bloquée par les couteaux 5, ce qui permet un farinage efficace ainsi qu'une lubrification optimale.

Avantageusement, le rouleau 4 de découpe comprend une âme centrale allongée qui s'étend longitudinalement de façon parallèle audit axe de rotation X-X', de préférence coaxialement à ce dernier, ainsi que des supports qui font localement saillie de ladite âme allongée et portent chacun l'un desdits couteaux 5. En d'autres termes, l'âme centrale allongée forme avantageusement un axe central à partir duquel s'étendent radialement lesdits supports, qui portent chacun à leur extrémité libre au moins un couteau 5, et de préférence un seul couteau 5.

Dans le mode de réalisation préférentiel illustré aux figures, le rouleau 4 de découpe cyclique est modulaire, c'est-à-dire qu'il est formé d'un ensemble de modules (composants élémentaires) associés entre eux pour former une unité de découpe monobloc, qui constitue ledit rouleau 4 de découpe cyclique. Plus précisément, le rouleau 4 de découpe comprend une pluralité de modules 50, chacun desdits modules 50 étant constitué d'une unité individuelle distincte et indépendante. Lesdits modules 50 sont de préférence identiques les uns aux autres, ce qui permet un haut degré de standardisation. Chacun desdits modules 50 comprend avantageusement un noyau 50A qui porte au moins l'un desdits couteaux 5. Chaque noyau 50A de chacun des modules 50 est avantageusement réalisé en un matériau métallique, par exemple en acier inoxydable. Comme illustré aux figures, lesdits modules 50 sont assemblés en rang les uns aux autres par leurs noyaux 50A respectifs, pour former un sous-ensemble unitaire de modules 50 immobilisés les uns par rapport aux autres. En d'autres termes, les noyaux 50A de chacun desdits modules 50 sont attachés les uns aux autres, directement ou par l'intermédiaire d'une pièce de liaison (comme dans le mode de réalisation illustré aux figures), les uns derrières les autres (i.e. les uns à la suite des autres), pour former un rang de modules 50 dans lequel chaque module 50 est interposé entre deux autres modules (à l'exception bien sûr des deux modules 50 extrêmaux situés respectivement à chaque extrémité du rang formant le sous-ensemble unitaire de modules 50). Le rang de noyaux 50A assemblés entre eux forme ainsi avantageusement à la fois l'âme centrale allongée et les supports qui portent les couteaux 5.

La liaison mécanique mise en oeuvre pour relier tous les noyaux 50A les uns aux autres est avantageusement une liaison qui permet d'immobiliser lesdits noyaux 50A les uns par rapport aux autres, au moins en rotation. Cela signifie qu'au sein dudit sous-ensemble unitaire de modules 50, lesdits modules 50 ne jouissent avantageusement d'aucune faculté de mobilité les uns par rapport aux autres, en particulier en rotation. Avantageusement, lesdits modules 50 sont assemblés en rang les uns aux autres par leurs noyaux 50A respectifs de façon démontable. Il est ainsi possible d'assembler / désassembler chaque module 50 du sous-ensemble unitaire de modules 50, ce qui permet de modifier à volonté la configuration du rouleau 4 de découpe, de façon extrêmement simple et rapide, pour tenir compte par exemple d'un changement de filière d'extrusion 3, et faciliter également la maintenance et la réparation du rouleau 4 de découpe.

Avantageusement, chaque module 50 forme l'un desdits groupes de n couteaux 5 évoqués précédemment. Par exemple, dans le mode de réalisation préférentiel illustré aux figures, les couteaux 5 sont répartis en une pluralité de groupes de trois couteaux, chaque groupe de trois couteaux étant lui-même formé par l'un desdits modules 50. Chaque module 50 comprend avantageusement une pluralité desdits couteaux 5 portée par son noyau 50A, les couteaux 5 de ladite pluralité de couteaux portée par le noyau 50A étant disposés selon une distribution angulaire régulière autour dudit noyau 50A. De façon avantageuse, chaque module 50 présente une symétrie de rotation discrète d'ordre n selon ledit axe de rotation X-X', avec n ≥ 2, de préférence avec n ≥ 3. Dans le mode de réalisation illustré aux figures, chaque module 50 présente une symétrie de rotation discrète d'ordre 3, chaque noyau 50A portant trois couteaux 5 qui sont équi-angulairement répartis.

Avantageusement, le rouleau 4 de découpe comprend un arbre central 6, qui est coaxial audit axe de rotation X-X' et qui est avantageusement conçu pour impartir au sous-ensemble unitaire de modules 50 un mouvement de rotation selon l'axe de rotation X-X'. Ledit arbre central 6 est avantageusement réalisé en métal, par exemple en acier inoxydable. L'arbre central 6 forme ainsi un arbre de transmission, qui présente avantageusement une forme globalement cylindrique, pleine ou creuse (forme tubulaire). Ledit arbre central 6 est avantageusement pourvu, à l'une de ses extrémités, d'un flasque 60. Ledit flasque 60 est relié à un arbre de sortie du moteur précité, qui assure la rotation, à une vitesse prédéterminée, de l'arbre central 6 selon l'axe de rotation X-X'.

Avantageusement, et comme illustré aux figures, chacun desdits noyaux 50A forme un moyeu qui est pourvu d'un orifice central et est enfilé sur ledit arbre central 6 pour que ce dernier passe par l'orifice central de chaque moyeu. Tous les modules 50 sont ainsi avantageusement enfilés les uns à la suite des autres, sur et le long de l'arbre central 6, lequel traverse les moyeux formés par les noyaux 50A de chaque module 50. Le rang de moyeux disposés les uns à la suite des autres, de préférence en contact deux à deux, forme ainsi avantageusement, avec l'arbre central 6, ladite âme centrale allongée évoquée précédemment. Chaque noyau 50A forme avantageusement, dans ce mode de réalisation, un manchon (ou bague) enfilé sur l'arbre central 6 et portant sur sa surface extérieure, en périphérie, les couteaux 5. Ces derniers sont reliés au moyeu qui les porte par des rayons respectifs. Lesdits rayons correspondent aux supports évoqués précédemment, qui portent les couteaux 5 en faisant saillie de l'âme allongée. Les moyeux formés par les noyaux 50A viennent avantageusement en butée les uns contre les autres, c'est-à-dire que le moyeu d'un module 50 donné vient axialement en butée contre le moyeu d'un autre module 50 qui lui est adjacent dans ledit rang de modules 50 formant le sous-ensemble unitaire. Avantageusement, chaque noyau 50A déborde latéralement (selon la direction d'extension longitudinale) des plans gauche P1 et droit P2, ce qui permet de ménager l'espace libre E évoqué précédemment, par simple mise en butée des modules 50 les uns contre les autres, sur et le long dudit arbre central 6.

Avantageusement, afin de permettre à l'arbre central 6 d'entraîner en rotation les modules 50 et assurer ainsi l'opération de découpe cyclique séquentielle en sortie des buses d'extrusion 2, le rouleau 4 de découpe comprend des moyens de liaison en rotation de chaque moyeu audit arbre central 6. Lesdits moyens de liaison en rotation comprennent par exemple, conformément au mode de réalisation illustré aux figures, des moyens de liaison par clavetage. Dans ce mode de réalisation préférentiel, chaque moyeu comprend une paroi annulaire 51A qui délimite ledit orifice central, lesdits moyens de liaison en rotation comprenant quant à eux :
- au moins des rainure de clavette 7 d'une part et mortaise 8 d'autre part ménagées respectivement sur l'arbre central 6 d'une part et sur chaque paroi annulaire 51A de chaque module 50 d'autre part.
- des clavettes 9, qui sont chacune reçues à la fois dans lesdites rainure 7 et mortaise 8, pour immobiliser ainsi en rotation chaque module 50 par rapport audit arbre central 6.

Ainsi, chaque module 50 est avantageusement fixé en rotation, selon l'axe de rotation X-X', audit arbre central 6 par une clavette 9 qui est insérée d'une part dans une rainure de clavette 7 ménagée à la surface de l'arbre central 6, comme illustré, et d'autre part dans une mortaise 8 ménagée sur la paroi annulaire 51A de chaque module 50. La rainure de clavette 7 se présente avantageusement sous la forme d'une gorge longitudinale ménagée sensiblement sur toute la longueur de l'arbre central 6, parallèlement à la direction d'extension longitudinale et à l'axe de rotation X-X'. Ladite gorge présente par exemple une section transversale rectangulaire. De la même façon, chaque mortaise 8 se présente elle aussi sous la forme d'une gorge, par exemple de section rectangulaire, tandis que chaque clavette 9 présente une forme par exemple sensiblement parallélépipédique.

Afin d'assurer un blocage axial des modules 50 enfilés sur l'arbre central 6, le rouleau 4 de découpe comprend par exemple des butées latérales gauche 10 et droite 11 qui sont fixées à l'arbre central 6, vers chacune des extrémités de ce dernier, avec le rang de modules 50 interposé entre lesdites butées 10, 11 pour être ainsi maintenu axialement en position sur l'arbre central 6.

Bien entendu, l'invention n'est pas limitée à des moyens de liaison en rotation par clavetage comme illustré. Il est par exemple tout à fait envisageable de recourir alternativement à des moyens de liaison par cannelures ou dentelures. Dans ce cas, l'arbre central 6 ne présente pas une section cylindrique de révolution mais une section qui n'est pas de révolution et dont la forme est conjuguée à celle de chaque paroi annulaire 51A, pour permettre un entraînement en rotation de chaque moyeu par l'arbre central 6 selon l'axe de rotation X-X', sous l'effet du mouvement de rotation imparti par le moteur évoqué précédemment.

Avantageusement, le noyau 50A de chaque module 50 est pourvu d'un organe d'assemblage conçu pour immobiliser ledit module 50 par rapport aux autres modules dudit rang dans une pluralité de positions angulaires différentes. Dans le mode de réalisation illustré aux figures et décrit dans ce qui précède, l'organe d'assemblage en question consiste en une pluralité de mortaises 8 réparties de manière régulière sur chaque paroi annulaire 51A de chaque moyeu. Par exemple, la paroi annulaire 51A de chaque moyeu est pourvue, comme illustré, de quatre mortaises 8 équiangulairement réparties sur la surface cylindrique de révolution de la paroi annulaire 51A. Ceci permet d'assembler chaque module 50 selon quatre positions angulaires différentes sur l'arbre central 6, en fonction de la mortaise 8, parmi les quatre mortaises disponibles, qui est disposée en regard de la rainure de clavette 7 qui accueille la clavette 9.

Avantageusement, chaque couteau 5 est fixé au support (formé par exemple par un noyau 50A) qui le porte par des moyens d'attache qui incluent un organe de verrouillage/déverrouillage 12 conçu pour évoluer entre :
- d'une part une configuration de verrouillage dans laquelle il immobilise ledit couteau 5 dans la position instantanée que ce dernier occupe au moment où l'organe de verrouillage/déverrouillage adopte sa configuration de verrouillage, et
- d'autre part une configuration de déverrouillage dans laquelle il autorise un déplacement du couteau 5 relativement audit support qui le porte.

Dans le mode de réalisation illustré aux figures, chaque couteau 5 est fixé au noyau 50A du module 50 dont il fait partie par lesdits moyens d'attaches, lesquels sont embarqués par ledit module 50. En configuration de déverrouillage, l'organe de verrouillage/déverouillage 12 autorise ainsi avantageusement un déplacement du couteau 5 concerné relativement au noyau 50A qui le porte.

Selon le mode de réalisation préférentiel illustré aux figures, l'organe de verrouillage / déverrouillage comprend une platine 500, par exemple de forme parallélépipédique, qui avantageusement vient de matière avec un bloc de coupe formant le couteau 5 correspondant. L'organe de verrouillage / déverrouillage inclut également une lumière oblongue ménagée à travers toute l'épaisseur de chaque platine 500, ainsi qu'une vis qui traverse ladite lumière oblongue et vient se visser dans un puits fileté correspondant solidaire du noyau 50A. Dans ce cas de figure, la configuration de déverrouillage correspond à une configuration desserrée de ladite vis, ce qui autorise ainsi le coulissement relatif de chaque vis par rapport à chaque platine 500 correspondante, grâce à la forme oblongue de la lumière qui reçoit la vis. La configuration de verrouillage correspond quant à elle à une configuration de serrage de la vis, qui vient bloquer tout coulissement relatif de la platine correspondante 500 relativement au noyau 50A. L'organe de verrouillage/déverrouillage 12 permet ainsi d'ajuster la position de chaque couteau 5, pour tenir compte par exemple de l'usure et/ou de la configuration des buses 2.

Avantageusement, lesdits moyens d'attache incluent en outre au moins un moyen de réglage 13 conçu pour ajuster, sous l'effet d'un actionnement manuel dudit moyen de réglage 13, la position d'un couteau 5 correspondant relativement audit support qui le porte, alors que l'organe de verrouillage/déverrouillage 12 est en configuration de déverrouillage. Dans l'exemple illustré aux figures, où chaque support est formé par un noyau 50A, le moyen de réglage 13 permet d'ajuster la position d'un couteau 5 correspondant relativement au noyau 50A qui porte ce dernier. Par exemple, dans le mode de réalisation illustré aux figures, le moyen de réglage 13 inclut une vis disposée parallèlement à la direction d'extension longitudinale de la lumière oblongue ménagée à travers la platine 500 concernée. La vis en question coopère avec un puits fileté ménagé dans le noyau 50A, de façon à permettre, en tournant ladite vis (vissage ou dévissage), de régler la position relative de la platine 500 relativement au noyau 50A.

L'invention concerne également en tant que tel un procédé de fabrication de pâtes alimentaires destinées à être réchauffées et/ou cuites avant d'être consommées.

Ledit procédé selon l'invention est donc un procédé de pastification, pour fabriquer des pâtes alimentaires destinées à être réchauffées et/ou cuites avant d'être consommées. Le procédé en question peut être mis en oeuvre, conformément à un mode de réalisation préférentiel, au moyen de l'installation de fabrication avec son dispositif de formage 1 décrit ci-avant. Dès lors, l'ensemble de la description qui précède concernant le dispositif 1 s'applique au procédé selon l'invention, et réciproquement la description qui suit relative au procédé selon l'invention s'applique au dispositif de formage 1 précité.

Il est ceci étant parfaitement envisageable que le procédé de fabrication selon l'invention soit mis en oeuvre au moyen d'un dispositif de formage qui diffère de celui décrit ci-avant.

Dans ce qui suit, par souci de concision, le procédé décrit correspond à celui mis en oeuvre par le dispositif de formage 1 selon l'invention.

Le procédé en question comprend préférentiellement une étape de réception, dans une cuve, de la composition pâteuse à partir de laquelle les pâtes alimentaires sont destinées à être formées. Ladite composition pâteuse est avantageusement conforme à la description qui précède.

Le procédé en question comprend une opération d'extrusion, au cours de laquelle la composition pâteuse passe par des buses d'extrusion 2 pour former, en sortie desdites buses 2, des extrudats à partir desquels les pâtes alimentaires sont destinées à être formées.

Le procédé comprend avantageusement, de préférence avant l'opération d'extrusion, une étape de laminage de ladite composition pâteuse pour la forcer à travers lesdites buses d'extrusion 2. Ladite étape de laminage est effectuée au moyen par exemple de rouleaux motorisés de laminage disposés à l'intérieur de la cuve précitée, pour forcer la composition pâteuse contenue dans la cuve à travers les buses d'extrusion 2, ces dernières communiquant avantageusement avec l'intérieur de ladite cuve.

Le procédé selon l'invention comprend également une opération de découpe cyclique desdits extrudats en sortie desdites buses d'extrusion 2, pour former préférentiellement des pâtons de taille et forme prédéterminées, par exemple des boulettes, des boudins et/ou des palets. Ladite opération de découpe cyclique consiste avantageusement à procéder à une découpe cyclique des extrudats sortant en continu des buses d'extrusion 2 pour obtenir des portions (pâtons) élémentaires.

L'opération de découpe est effectuée au moyen d'un rouleau 4 de découpe cyclique, qui est par exemple conforme à la description qui précède, et qui tourne relativement aux buses d'extrusion 2, selon un axe de rotation X-X'.

Ledit rouleau 4 de découpe cyclique qui assure ladite opération de découpe cyclique comprend, comme exposé précédemment, une pluralité de couteaux 5 individuels qui sont distincts et distants les uns des autres, et sont répartis selon une distribution hélicoïdale le long dudit axe de rotation X-X', conformément à la description qui précède.

Avantageusement, le procédé de fabrication selon l'invention comprend une étape préalable de fabrication de ladite composition pâteuse par malaxage et cuisson d'un mélange formé à partir d'au moins une farine et/ou d'une semoule d'au moins une céréale contenant des protéines capables de former du gluten d'une part et d'un liquide d'hydratation d'autre part. Avantageusement, ledit mélange inclut en outre des ingrédients supplémentaires, comme par exemple des flocons de tubercule de *Solanum tuberosum* déshydraté, et/ou des additifs ou adjuvants divers (oeufs, etc.), comme déjà exposé dans ce qui précède en relation avec le dispositif de formage 1.

## Revendications

1. Dispositif de formage (1) de pâtes alimentaires destinées à être réchauffées et/ou cuites avant d'être consommées, ledit dispositif de formage (1) comprenant :
- des buses d'extrusion (2) par lesquelles est destinée à passer une composition pâteuse, pour former, en sortie desdites buses (2), des extrudats à partir desquels les pâtes alimentaires sont destinées à être formées,
- un rouleau (4) de découpe cyclique desdits extrudats en sortie desdites buses d'extrusion, ledit rouleau (4) de découpe cyclique étant monté mobile à rotation relativement auxdites buses d'extrusion (2), selon un axe de rotation (X-X'),
**caractérisé en ce que** ledit rouleau (4) de découpe cyclique comprend une pluralité de couteaux individuels (5) qui sont distincts et distants les uns des autres, lesdits couteaux (5) étant répartis selon une distribution hélicoïdale le long dudit axe de rotation (X-X').

2. Dispositif de formage (1) selon l'une quelconque des revendications précédentes **caractérisé en ce que** chaque couteau (5) présente une arête de coupe (5A) qui s'étend sensiblement parallèlement audit axe de rotation (X-X'), chaque couteau (5) comprenant un bloc de coupe de forme sensiblement polyédrique qui présente deux faces planes inclinées l'une par rapport à l'autre et dont l'intersection forme ladite arête de coupe (5A).

3. Dispositif de formage (1) selon l'une quelconque des revendications précédentes **caractérisé en ce que** lesdites buses d'extrusion (2) sont disposées en rang les unes à côté et à distance des autres, lesdits couteaux (5) étant destinés à suivre des trajectoires circulaires respectives, sous l'effet de la rotation dudit rouleau (4) de découpe cyclique, chaque buse d'extrusion (2) étant positionnée au droit d'une seule desdites trajectoires circulaires pour que chaque couteau (5) assure la découpe cyclique d'un seul desdits extrudats issu d'une seule desdites buses d'extrusion (2).

4. Dispositif de formage (1) selon l'une quelconque des revendications précédentes **caractérisé en ce que** lesdits couteaux (5) sont répartis en une pluralité de groupes de n couteaux (5), avec n ≥ 2, chacun desdits groupes présentant une symétrie de rotation discrète d'ordre n selon ledit axe de rotation (X-X'), lesdits groupes étant répartis à intervalle régulier en rang les uns derrière les autres le long dudit axe de rotation (X-X'), avec un décalage angulaire entre deux groupes adjacents pour réaliser ainsi ladite distribution hélicoïdale le long dudit axe de rotation (X-X').

5. Dispositif de formage (1) selon la revendication précédente **caractérisé en ce que** chaque groupe de couteaux (5) s'étend, selon une direction d'extension longitudinale parallèle audit axe de rotation (X-X'), entre des plans gauche (P1) et droit (P2) perpendiculaires audit axe (X-X') de rotation, le plan gauche de chaque groupe étant distant du plan droit d'un autre groupe qui lui est adjacent au sein dudit rang de groupes, pour ménager un espace intergroupe (E) libre selon la direction d'extension longitudinale.

6. Dispositif de formage (1) selon l'une quelconque des revendications précédentes **caractérisé en ce que** ledit rouleau (4) de découpe comprend une âme centrale allongée qui s'étend longitudinalement de façon parallèle audit axe de rotation (X-X'), ainsi que des supports qui font localement saillie de ladite âme allongée et portent chacun l'un desdits couteaux (5).

7. Dispositif de formage (1) selon la revendication précédente **caractérisé en ce que** chaque couteau (5) est fixé au support qui le porte par des moyens d'attache qui incluent un organe de verrouillage / déverrouillage (12) conçu pour évoluer entre d'une part une configuration de verrouillage dans laquelle il immobilise ledit couteau (5) dans la position instantanée que ce dernier occupe au moment où l'organe de verrouillage / déverrouillage adopte sa configuration de verrouillage, et une configuration de déverrouillage dans laquelle il autorise un déplacement du couteau (5) relativement audit support qui le porte, lesdits moyens d'attache incluant en outre au moins un moyen de réglage (13) conçu pour ajuster, sous l'effet d'un actionnement manuel dudit moyen de réglage (13), la position dudit couteau (5) relativement audit support qui le porte alors que l'organe de verrouillage / déverrouillage est en configuration de déverrouillage.

8. Dispositif de formage (1) selon l'une quelconque des revendications précédentes **caractérisé en ce que** ledit rouleau (4) de découpe cyclique est modulaire et comprend une pluralité de modules (50), chacun desdits modules (50) comprenant un noyau (50A) qui porte au moins l'un desdits couteaux (5), lesdits modules (50) étant assemblés en rang les uns aux autres par leurs noyaux (50A) respectifs, pour former un sous-ensemble unitaire de modules (50) immobilisés les uns par rapport aux autres.

9. Dispositif de formage (1) selon la revendication précédente **caractérisé en ce que** le noyau (50A) de chaque module (50) est pourvu d'un organe d'assemblage conçu pour immobiliser ledit module (50) par rapport aux autres modules (50) dudit rang de modules (50) dans une pluralité de positions angulaires différentes.

10. Dispositif de formage (1) selon l'une quelconque des revendications 8 et 9 **caractérisé en ce que** chaque module (50) présente une symétrie de rotation discrète d'ordre n selon ledit axe de rotation (X-X'), avec n ≥ 2, de préférence avec n ≥ 3.

11. Dispositif de formage (1) selon l'une quelconque des revendications 8 à 10 **caractérisé en ce que** ledit rouleau (4) de découpe comprend un arbre central (6), chacun desdits noyaux (50A) formant un moyeu qui est pourvu d'un orifice central et est enfilé sur ledit arbre central (6) pour que ce dernier passe par l'orifice central de chaque moyeu, ledit rouleau (4) de découpe comprenant des moyens de liaison en rotation de chaque moyeu audit arbre central (6).

12. Installation de fabrication de pâtes alimentaires destinées à être réchauffées et/ou cuites avant d'être consommées, ladite installation incluant au moins :
- un poste de fabrication d'une composition pâteuse à partir de laquelle lesdites pâtes alimentaires sont destinées à être fabriquées,
- un dispositif de formage (1) selon l'une quelconque des revendications précédentes.

13. Procédé de fabrication de pâtes alimentaires destinées à être réchauffées et/ou cuites avant d'être consommées, ledit procédé comprenant :
- une opération d'extrusion au cours de laquelle une composition pâteuse passe par des buses d'extrusion (2) pour former, en sortie desdites buses, des extrudats à partir desquels les pâtes alimentaires sont destinées à être formées,
- une opération de découpe cyclique desdits extrudats en sortie desdites buses d'extrusion (2),
**caractérisé en ce que** ladite opération de découpe cyclique est effectuée au moyen d'un rouleau (4) de découpe cyclique qui tourne relativement auxdites buses d'extrusion (2), selon un axe de rotation (X-X'), ledit rouleau (4) de découpe cyclique comprenant une pluralité de couteaux (5) individuels qui sont distincts et distants les uns des autres, lesdits couteaux (5) étant répartis selon une distribution hélicoïdale le long dudit axe de rotation (X-X').

14. Procédé de fabrication selon la revendication précédente **caractérisé en ce qu'**il comprend une étape de laminage de ladite composition pâteuse pour la forcer à travers lesdites buses d'extrusion (2).

15. Procédé de fabrication selon la revendication 13 ou 14 **caractérisé en ce qu'**il comprend une étape préalable de fabrication de ladite composition pâteuse par malaxage et cuisson d'un mélange formé à partir au moins d'une farine et / ou d'une semoule d'au moins une céréale contenant des protéines capables de former du gluten et d'un liquide d'hydratation.
